# EUROPÄISCHE PATENTSCHRIFT

(11) **EP 1 384 924 B1**
(45) Veröffentlichungstag und Bekanntmachung des Hinweises auf die Patenterteilung: **23.06.2010**
(21) Anmeldenummer: 03007174.0
(22) Anmeldetag: 28.03.2003
(51) Int. Cl.: F16K 15/02

(54) **Plättchen-Rückschlagventil**
Disc check valve
Soupape aniretour à disque

(30) Priorität: 22.07.2002 DE 20211042 U
(43) Veröffentlichungstag der Anmeldung: 28.01.2004
(73) Patentinhaber: HAWE Hydraulik SE, 81673 München (DE)
(72) Erfinder: Neumair, Georg, Dipl.-Ing., 85402 Thalhausen (DE)
(74) Vertreter: Grünecker, Kinkeldey, Stockmair & Schwanhäusser Anwaltssozietät

(56) Entgegenhaltungen:
- DE-A- 1 959 994
- DE-A- 2 449 443
- DE-A- 2 726 645
- DE-A- 19 927 392
- GB-A- 707 803

## Beschreibung

Die Erfindung betrifft ein Plättchen-Rückschlagventil der im Oberbegriff des Anspruchs 1 angegeben Art.

Plättchen-Rückschlagventile werden z.B. in Drossel-Rückschlagventile integriert, um in einer Strömungsrichtung einen im Wesentlichen ungedrosselten Strom zu gewährleisten, oder für sich eingebaut, um eine Rückschlagfunktion zu erhalten. Aus der technischen Information "Rückschlagventil Typ RE", Registriemummer D7555R, April 2000, der Firma Heilmeier & Weinlein, 81673 München, ist ein Plättchen-Rückschlagventil bekannt, dessen Ventilgehäuse ein einteiliger Einschraubring mit einem den Ventilsitz verlängernden Durchgangskanal ist. Die Dichtfläche ist eine ebene, gehärtete und geschliffene Kreisfläche. Am Umfang des Ventilplättchens sind in regelmäßigen Abständen drei Führungsvorsprünge vorgesehen, die zwischen sich Durchflussausschnitte freilassen und das Bewegungsspiel des Ventilplättchens in Richtung der Ventilsitzachse und quer dazu begrenzen. Das bekannte Plättchen-Rückschlagventil sperrt in Strömungsrichtung vom Ventilplättchen zum Ventilsitz. Es gibt keine Möglichkeit, in derselben Einbaulage eine andere Sperrrichtung zu wählen.

Aus der technischen Information "Schlitzdrossel Typenreihe Q, QR und QV', Registriernummer D 7730, vom April 1995, der Firma Heilmeier & Weinlein, 81673 München, sind zwei Typen von Drosselrückschlagventilen bekannt. Abhängig von der gewünschten Sperrrichtung zwischen zwei Druckmittelanschlüssen wird der passende Ventiltyp in einer bestimmten Einbaulage eingebaut. Die Ventiltypen unterscheiden sich in ihrer Gestaltung. Um unter gleichen Einbauvoraussetzungen beide Sperrrichtungen beherrschen zu können, ist der Mehraufwand zweier verschiedener Ventiltypen erforderlich, was erhöhte Herstellungskosten bedingt.

Aus DE 199 27 392 A ist ein Stromregelventil mit Messblende und Regelblende und einer dazwischen liegenden Feder bekannt, wobei die Messblende eine Öffnung in einem Plättchen ist, an dem Abstandshalter angebracht sind, um einen ungeregelten Rückstromweg offenzuhalten. Eine Rückschlagfunktion ist nicht vorgesehen. Das Plättchen regelt den Strom unabhängig von Druckschwankungen durch einen gegen die Federkraft in die Regelblende eintauchenden Dom. Es ist nur eine Einbaulage offenbart.

Ein aus GB 707 803 bekanntes Rückschlagventil enthält einen Scheibenkörper, der mit koaxialen Schäften axial beweglich geführt ist und an einem Schaft ein eine Endlage definierendes Abstandselement trägt. Für die gewünschte Ventilfunktion muss das Ventilglied unter Schwerkrafteinfluss selbsttätig relativ zu einer flexiblen Innenauskleidung des Ventilkörpers aus der Absperrlage in die Durchflusslage zurückkehren, die durch das Abstandselement definiert ist. Der Scheibenkörper lässt sich in zwei zueinander umgekehrten Lagen einsetzen.

Der Erfindung liegt die Aufgabe zugrunde, ein Plättchen-Rückschlagventil in einem Drosselrückschlagventil anzugeben, das kostengünstig ist und mit einem Ventiltyp wahlweise unterschiedliche Sperrrichtungen realisieren lässt.

Die gestellte Aufgabe wird mit einem Plättchen-Rückschlagventil gelöst, bei dem die Merkmalskombination des Anspruchs 1 realisiert ist.

Mit diesem Gestaltungskonzept, d.h. zwei sich gegenüberliegenden Ventilsitzen in der Kammer, die durch zwei miteinander verbundene Ventilgehäuseteile begrenzt wird, und dem wenigstens einen gegenüber der Rückseite des Ventilplättchens erhabenen Abstandselement, wird, bei gleichen Einbauvoraussetzungen wahlweise in der einen oder in der anderen Strömungsrichtung abgesperrt, und in der entgegengesetzten Strömungsrichtung ein im Wesentlichen ungedrosselter Strom zugelassen. Je nach der gewünschten Absperrrichtung wird das Ventilplättchen vor dem Verbinden der Ventilgehäuseteile mit der Dichtfläche zum einen oder zum anderen Ventilsitz weisend eingesetzt. Das Abstandselement am Ventilplättchen stellt sicher, dass bei vom aktiven Ventilsitz abgehobener Dichtfläche des Ventilplättchens der andere, dann nur eine Abströmfunktion zulassende Ventilsitz durchgängig bleibt. Mit identischen Komponenten werden auf diese Weise zwei Ventiltypen für die beiden Absperrrichtungen erreicht, wobei als einziger Unterschied zwischen diesen beiden Ventiltypen das Ventilplättchen einmal sozusagen normal und das andere Mal um 180° umgedreht eingesetzt ist. Normalerweise wird bereits vom Hersteller die Absperrrichtung bei der Montage festgelegt. Es ist jedoch durchaus möglich, die Verbindung der Ventilgehäuseteile lösbar zu gestalten, so dass auch nachträglich eine Umkehrung der Absperrrichtung vorgenommen werden kann. Das Plättchen-Rückschlagventil mit diesem Konzept kann für sich in einer festgelegten Einbaulage am Drosselrückschlagventil montiert sein, um wahlweise die eine oder die andere Drosselrichtung zu beherrschen. In dem Drosselrückschlagventil bildet herstellungstechnisch günstig der eine Ventilgehäuseteil gleichzeitig den Drosselfortsatz für die Drosselfunktion. Im Plättchen-Rückschlagventil sind beide, Ventilsitze aufweisenden Kammerwände zueinander parallel und sind die beiden Ventilsitze gleich groß und in gegenseitiger Fluchtung angeordnet. Auf diese Weise werden für beide Absperrrichtungen gleiche Absperr- und Drosselverhältnisse gewährleistet.

Herstellungstechnisch einfach ist zumindest ein Führungsvorsprung, der zur Spielbegrenzung des Ventilplättchens in der Kammer dient, mit dem Abstandselement versehen ist. Vorzugsweise ist jeder Führungsvorsprung mit einem Abstandselement versehen, um eine einwandfrei definierte Öffnungsposition des Ventilplättchens zu gewährleisten. Die Außenkontur jedes Abstandselementes ist bombiert oder konvex gerundet, damit sich das Ventilplättchen an der Kammerwand nicht verklemmt. Diese Krümmung kann in Umfangsrichtung und/oder in Axialrichtung vorgesehen sein.

Der Drosselfortsatz weist entweder ein Drosselaußengewinde auf, das in einen passenden Innengewindeabschnitt entsprechend weit eingeschraubt wird, oder/und wenigstens einen die Innenkanalwand durchsetzenden Drosselschlitz, mit dem sich ein gewünschter Drosselfaktor einstellen lässt.

In einer Einschraubventileinheit des Drosselrückschlagventils kann der andere Gehäuseteil des Plättchen-Rückschlagventils in einem Einschraub-Gewindefortsatz gehaltert sein, vorzugsweise verschraubbar gehaltert sein, um die Einschraubtiefe bzw. die Drosselwirkung verstellen zu können. Wenigstens ein Querkanal stellt eine Strömungsverbindung zum Ventilsitz des anderen Gehäuseteils her.

Die Gehäuseteile können durch eine Bördelverbindung miteinander verbunden sein, die kostengünstig herstellbar und zuverlässig dicht ist. Alternativ ist auch eine Schraubverbindung denkbar, die gegebenenfalls zur Umkehr der Absperrrichtung lösbar ist.

Um dauerhaft gleichbleibende Absperrverhältnisse sicherzustellen, sollten die VentilGehäuseteile und das Ventilplättchen aus Stahl bestehen, wobei die Dichtfläche sowie beide Ventilsitze gehärtet und geschliffen sind. Der Ventilsitz kann entweder durch einen vortretenden Ringflansch gebildet werden oder nur durch eine Bohrungsmündung. Die Dichtfläche des Ventilplättchens kann eben sein, oder konisch oder sphärisch, beispielsweise falls das Ventilplättchen aus einer Vollkugel hergestellt wird.

Anhand der Zeichnung werden Ausführungsformen des Erfindungsgegenstandes erläutert. Es zeigen:
- Fig. 1: einen Axialschnitt eines Drosselrückschlagventils mit integriertem Plätt- chen-Rückschlagventil in einer bestimmten Einbaulage und mit vorbe- stimmter Absperrrichtung des Plättchen-Rückschlagventils,
- Fig. 1A: eine Ansicht in Fig. 1 von rechts,
- Fig. 2: einen Achsschnitt des Drosselrückschlagventils mit integriertem Plätt- chen-Rückschlagventil für die gegenüber Fig. 1 umgekehrte Absperr- richtung, und
- Fig. 2A: eine Rückansicht in Fig. 2 von rechts.

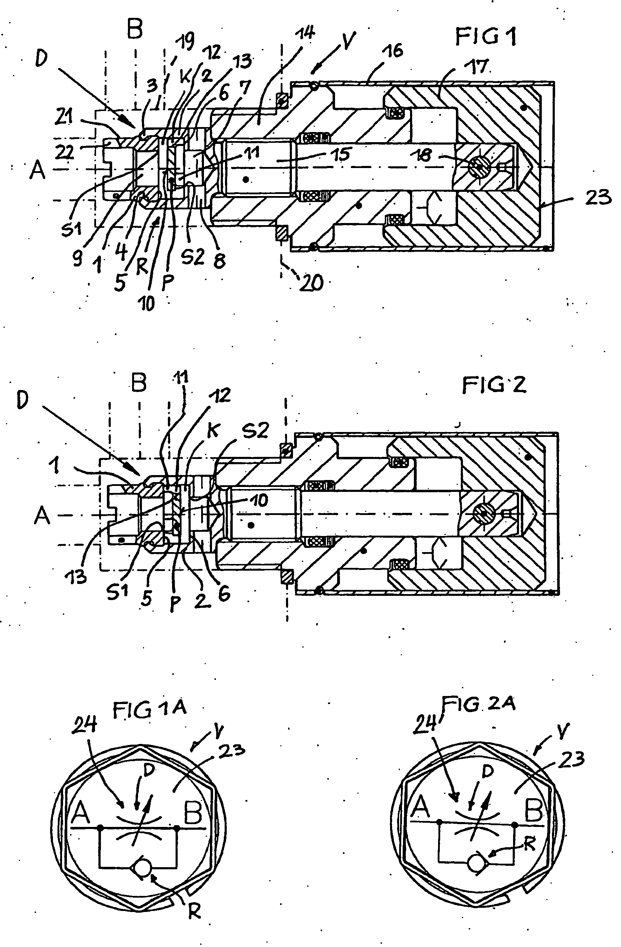

Ein beispielsweise in eine Einschraubventileinheit V eingegliedertes Plättchen-Rückschlagventil R (Fig. 1 bzw. Fig. 2) lässt sich wahlweise für die eine oder die andere Durchström- bzw. Absperrrichtung aus identischen Komponenten (symbolisch in den Fig. 1A und Fig. 2A angedeutet) gestalten, um in derselben Einbaulage eine im Wesentlichen ungedrosselte Hydraulik-Strömung von einem Druckmittelanschluss A zu einem Druckmittelanschluss B (Fig. 1, Fig. 1A) oder von dem Druckmittelanschluss B zum Druckmittelanschluss A (Fig. 2, Fig. 2A) zuzulassen, und in der jeweiligen entgegengesetzten Strömungsrichtung abzusperren.

Das Plättchen-Rückschlagventil R weist zwei miteinander verbundene Ventilgehäuseteile 1, 2 auf, wobei in der gezeigten Ausführungsform eine Bördelverbindung aus einem Bördelrand 3 des Ventilgehäuseteils 2 und einer Bördelnut 4 des Ventilgehäuseteils 1 gewählt ist Alternativ könnte hier auch eine Schraubverbindung oder jegliche andere dichte Verbindung vorgesehen sein. Die miteinander verbundenen Ventilgehäuseteile 1, 2 begrenzen eine bei der gezeigten Ausführungsform beispielsweise zylindrische Kammer K mit zueinander parallelen ersten und zweiten Kammerwänden 5, 6, deren jede einen Ventilsitz S1, S2 aufweist. Die Ventilsitze S1 sind beispielsweise gleich groß und fluchten miteinander. Der Ventilsitz S1 wird durch einen Innenkanal 9 verlängert, während der Ventilsitz S2 durch eine Blindbohrung 7 und wenigstens einen seitlichen, nach außen geführten Kanal 8 fortgesetzt ist.

Vor dem Verbinden der Ventilgehäuseteile 1, 2 wird ein Ventilplättchen P in die Kammer K eingelegt. Eine Ventilschließfeder kann (nicht gezeigt) vorgesehen sein, wird für die Rückschlagventilfunktion aber nicht benötigt.

Das Ventilplättchen P besitzt einen geringfügig kleineren Außendurchmesser als den Innendurchmesser der Kammer K und eine Dichtfläche 10 an einer Plättchenseite. Die Dichtfläche 10 ist größer als der Querschnitt jedes Ventilsitzes S1, S2. Umfangsseitig sind am Ventilplättchen P Führungsvorsprünge 12 geformt, beispielsweise drei gleichmäßig entlang des Umfangs verteilte Führungsvorsprünge 12, zwischen denen Durchflussausschnitte 13 begrenzt werden. Mit zweckmäßigerweise jedem Führungsvorsprung 12 ist ein Abstandselement 11 vereinigt, das von der Rückseite des Ventilplättchens vorsteht und zur Hubbegrenzung des Ventilplättchens P in der Kammer K dient. Die axial gesehene Höhe des Ventilplättchens einschließlich des wenigstens einen Abstandselementes 11 ist um einen vorbestimmten Öffnungshub kleiner als der Abstand zwischen den Kammerwänden 5, 6. Die Außenkonturen der Führungsvorsprünge 12 und der Abstandselemente 11, die sich an dem Ventilplättchen auf einem größeren Durchmesser als dem Innendurchmesser der Ventilsitze S1, S2 befinden, sind zweckmäßig bombiert oder konvex gerundet, beispielsweise mit dem Radius des Außendurchmessers des Ventilplättchens P. Bei dem in Fig. 1 und 2 gezeigten Ventilplättchen können zweckmäßig die Außenkonturen der Führungsvorsprünge 12 und der Abstandselemente 11 auch in der gezeigten Schnittansicht bombiert oder konvex gerundet sein, um eine Verklemmung des Ventilplättchens in der Kammer K zu vermeiden.

In der in den Figuren gezeigten Einbaulage des Plättchenrückschlagventils R ist im Innenkanal 9 der Druckmittelanschluss A zugeordnet, und den Kanälen 8 der Druckmittelanschluss B.

Die Dichtfläche 10 kann eben sein, wie gezeigt, oder kegelig bzw. kugelig (nicht gezeigt).

Um einen im Wesentlichen ungedrosselten Durchgang vom Druckmittelanschluss A zum Druckmittelanschluss B zuzulassen, wird vor dem Verbinden der Ventilgehäuseteile 1, 2 das Ventilplättchen P so in die Kammer K eingelegt, dass die Dichtfläche 10 zum Ventilsitz S1 weist (Fig. 1). Soll hingegen mit denselben Komponenten und hin derselben Einbaulage eine im Wesentlichen ungedrosselte Strömung vom Druckmittelanschluss B zum Druckmittelanschluss A möglich sein, dann wird das Ventilplättchen P vor dem Verbinden der Ventilgehäuseteile 1, 2 so in die Kammer K eingelegt, dass die Dichtfläche 10 zum Ventilsitz S2 weist (Fig. 2).

### Funktion des Plättchenrückschlagventils:

Ist in der Einbaulage von Fig. 1 der Druck im Druckmittelanschluss A höher als im Druckmittelanschluss B, dann wird das Ventilplättchen P mit den Abstandselementen 11 an die Kammerwand 6 gelegt, so dass die Durchflussausschnitte 3 und die in Umfangsrichtung vorgesehenen Zwischenabstände zwischen den Abstandselementen 11 die Umströmung des Ventilplättchens bis in den Ventilsitz S2 gestatten (in Fig. 1 gezeigt). Ist hingegen der Druck im Druckmittelanschluss B höher als im Druckmittelanschluss A, dann wird das Ventilplättchen in Fig. 1 mit der Dichtfläche 10 auf den Ventilsitz S1 gepresst, um den Durchfluss abzusperren.

Ist in der Auslegung der Fig. 2 der Druck im Druckmittelanschluss A höher als im Druckmittelanschluss B, dann wird das Ventilplättchen B aus der in Fig. 2 gezeigten Lage an der Kammerwand 5 mit der Dichtfläche 10 an die Kammerwand 6 angelegt, um den Ventilsitz S2 abzudichten und die Strömung abzusperren. Ist hingegen der Druck im Druckmittelanschluss B höher als im Druckmittelanschluss A, dann wird das Ventilplättchen P in die in Fig. 2 gezeigte Lage an die Kammerwand 5 gedrückt. Die Abstandselemente 11 halten den Durchfluss über die Durchflussausschnitte 13 frei und lassen die Strömung vom Druckmittelanschluss B zum Druckmittelanschluss A zu.

In den Fig. 1 und 2 ist das Plättchen-Rückschlagventil R, das auch für sich eingebaut werden könnte, in die Einschraubventileinheit V eingegliedert, die hier ein Drosselrückschlagventil D ist, mit dem in Fig. 1 ein Druckmittelstrom vom Druckmittelanschluss B zum Druckmittelanschluss A, vorzugsweise einstellbar, gedrosselt soll, während in der entgegengesetzten Strömungsrichtung eine im Wesentlichen ungedrosselte Durchströmung angestrebt wird.

Der Gehäuseteil 1 ist mit einem den Innenkanal 9 umgebenden Drosselfortsatz 21 ausgebildet, der die Innenkanalwand durchsetzende Drosselschlitze 22 aufweist, die die Drosselwirkung bestimmen.

In Fig. 2 wird mit dem Drosselrückschlagventil D die Strömung von Druckmittelanschluss A zum Druckmittelanschluss B gedrosselt werden.

Das Plättchen-Rückschlagventil R ist in einem Einschraubfortsatz 14 mit einer Außengewindespindel 15 axial verstellbar gehaltert. Der Einschraubfortsatz 14 wird durch eine abziehbare Hülse 16 abgedeckt, unter der sich ein Drehknopf 17 befindet, der mit der Außengewindespindel 15 durch einen Querstift 18 gekoppelt ist. Der Einschraubfortsatz 14 ist in eine Gewindebohrung 19 eines Bauteils 20 dicht eingeschraubt. In die Gewindebohrung 19 münden die Druckmittelanschlüsse A, B.

Zur bequemen Handhabung und Orientierung ist an einer rückwärtigen Sichtseite 23 des Drosselrückschlagventils D die Funktion durch ein Sinnbild 24 angedeutet. Gemäß Fig. 1A sperrt das Plättchen-Rückschlagventil R in Strömungsrichtung vom Druckmittelanschluss B zum Druckmittelanschluss A, so dass dann das Drosselrückschlagventil D entsprechend der Einstellung der Außengewindespindel 15 im Einschraubfortsatz 14 drosselt. In der Auslegung der Fig. 2A entsprechend Fig. 2 drosselt das Drosselrückschlagventil D hingegen in Strömungsrichtung vom Druckmittelanschluss A zum Druckmittelanschluss B, in der das Plättchen-Rückschlagventil R absperrt.

Wird das Plättchen-Rückschlagventil R für eine ausschließliche Rückschlagventilfunktion installiert, dann kann der Drosselfortsatz 21 des Ventilgehäuseteils 1 weggelassen und der Ventilgehäuseteil 1 direkt beispielsweise mittels einer Positionierungsund Verschlussschraube abdichtend gegen die Mündung des Druckmittelanschlusses A gesetzt werden. Der Ventilgehäuseteil 2 kann mit der Verschlussschraube vereinigt oder von dieser getrennt sein. Je nach Einsetzlage des Ventilplättchens wird dann, wie erläutert, in der einen oder der anderen Strömungsrichtung ein im Wesentlichen ungedrosselter Durchfluss gestattet und in der entgegengesetzten Strömungsrichtung abgesperrt.

Zweckmäßig bestehen die Ventilgehäuseteile 1, 2 und auch das Ventilplättchen P aus Stahl. Die Ventilsitze S1, S2 und die Dichtfläche 10 sollten gehärtet und geschliffen sein. Das in den Figuren gezeigte Ventilplättchen B ist einfach und kostengünstig herstellbar, beispielsweise in einer Drehmaschine von Stangenmaterial mit angetriebenen Werkzeugen, die das Ventilplättchen in einem Zuge fertig stellen. Altemativ ließe sich das Ventilplättchen mit kugeliger Dichtfläche auch aus einer Vollkugel bilden.

## Patentansprüche

1. Plättchen-Rückschlagventil (R) mit einem Ventilgehäuse (1, 2), in dem wenigstens ein einem ersten Druckmittelanschluss (A) zugeordneter Ventilsitz und angrenzend an den Ventilsitz eine gegenüber diesem im Durchmesser größere Kammer (K) vorgesehen sind, mit einem Ventilplättchen (P) in der Kammer (K), das in Richtung der Ventilsitzachse und quer dazu relativ zum Ventilsitz beweglich ist und eine gegen den Ventilsitz anlegbare Dichtfläche (10) und umfangsseitig Durchflussausschnitte (13) begrenzende Führungsvorsprünge (12) aufweist, wobei die Kammer (K) mit einem zweiten Druckmittelanschluss (B) kommuniziert, **gekennzeichnet durch** die Kombination folgender Merkmale:
a) Die Kammer (K) wird **durch** zwei miteinander verbundene Ventilgehäuseteile (1, 2) begrenzt, und weist zwei gegenüberliegende Kammerwände (5, 6) mit je einem Ventilsitz (S1, S2) auf, wobei die Ventilsitze (S1, S2) zueinander parallel und gleich groß sind und miteinander fluchten,
b) am Ventilplättchen (P) ist auf der der Dichtfläche (10) abgewandten Rückseite auf einem Durchmesser außerhalb des Ventilsitzdurchmessers wenigstens ein erhabenes Abstandselement (11) angeordnet,
c) das Ventilplättchen (P) ist vor dem Verbinden der Ventilgehäuseteile (1, 2) wahlweise mit der Dichtfläche (10) zum einen oder zum anderen Ventilsitz (S1 oder S2) weisend in die Kammer (K) so einsetzbar, dass unabhängig von der Einsetzlage des Ventilplättchens (P) die Kammerwände das Ventilplättchen mit seinem Abstandselement (11) mit einem Öffnungsspiel zwischen sich einschließen und eine Rückschlagfunktion in der Durchströmrichtung gegeben ist, in der die Dichtfläche (10) zum jeweiligen Ventilsitz (S1 oder S2) weist,
d) der eine Ventilgehäuseteil (1) des in ein Drosselrückschlagventil (D) integrierten Plättchen-Rückschlagventils (R) ist als Drosselfortsatz (21) mit einem zum Ventilsitz (S1) führenden Innenkanal (9) ausgebildet.

2. Plättchen-Rückschlagventil nach Anspruch 1, **dadurch gekennzeichnet, dass** zumindest ein Führungsvorsprung (12) mit dem Abstandselement (11) versehen ist, vorzugsweise jeder Führungsvorsprung mit einem Abstandselement versehen ist, und dass zumindest in einer Ansicht des Ventilplättchens (P) senkrecht zur Dichtfläche (10) die Außenkontur jedes Abstandselements (11) bombiert bzw. konvex gerundet ist.

3. Plättchen-Rückschlagventil nach Anspruch 1, **dadurch gekennzeichnet, dass** der Drosselfortsatz (21) entweder ein Drosselaußengewinde oder wenigstens einen die Innenkanalwand durchsetzenden Drosselschlitz (22) aufweist.

4. Plättchen-Rückschlagventil nach Anspruch 1. **dadurch gekennzeichnet, dass** der andere Gehäuseteil (2) in einem Einschraub-Gewindefortsatz (14) einer Einschraubventileinheit (V) gehaltert, vorzugsweise verschraubbar gehaltert, und ist, einen kleineren Außendurchmesser besitzt als der Einschraub-Gewindefortsatz (14), und dass im anderen Ventilgehäuseteil (2) von außen wenigstens ein Querkanal (8) zu einer den Ventilsitz (S2) verlängernden Blindbohrung (7) führt.

5. Plättchen-Rückschlagventil nach Anspruch 1, **dadurch gekennzeichnet, dass** die beiden Ventilgehäuseteile (1, 2) durch eine Bördel- oder eine Schraubverbindung (3, 4) miteinander verbunden sind.

6. Plättchen-Rückschlagventil nach Anspruch 1, **dadurch gekennzeichnet, dass** die Ventilgehäuseteile (1, 2) und das Ventilplättchen (P) jeweils aus Stahl bestehen, und dass die Dichtfläche (10) sowie die beiden Ventilsitze (S1, S2) gehärtet und geschliffen sind.

## Claims

1. Disc check valve (R), comprising a valve casing (1, 2) provided with at least one valve seat associated to a first pressure medium port (A) and with a chamber (K) adjacent to the valve seat, the chamber (K) having a larger diameter than the valve seat, a valve disc (P) in the chamber (K), the valve disc being movable in the direction of the axis of the valve seat and crosswise to the axis and relative to the valve seat, the valve disc having a sealing surface (10) for being put against the valve seat and circumferential guiding projections (12) bounding through flow cutouts (13), the chamber (K) communicating with a second pressure medium port (8), **characterised by** the combination of the following features:
a) the chamber (K) is bounded by two valve casing parts (1, 2) connected to each other, and has two opposite chamber walls (5, 6) each having a respective valve seat (S1, S2), the valve seats (S1, S2) being parallel to each other, of equal sizes, and registered with each other,
b) at least one protruding spacer element (11) being provided at the valve disc (P) on the rear side remote from the sealing surface (10) at a sealing surface diameter outside of the valve seat diameter,
c) the valve disc (P) being insertable into the chamber (K) prior to connecting the valve casing parts (1, 2) selectively such that the sealing surface (10) faces to the one or to the other valve seat (S1 or S2) such that irrespective of the position of the inserted valve disc (P) the chamber walls confine the valve disc with its spacer element (11) with an opening clearance between each other and such that a check valve function is achieved in the through flow direction in which the sealing surface (10) faces the respective valve seat (S1 or S2),
d) with the disc check valve integrated into a throttling check valve (D) one valve casing part (1) is formed as a throttling projection (21) having an internal channel (9) leading to the valve seat (S1).

2. Disc check valve as in claim 1, **characterised in that** at least one guiding projection (12) is provided with the spacer element (11), preferably such that each guiding projection is provided with a spacer element, and that at least in a view on the valve disc (P) perpendicular to the sealing surface (10) the outer contour of each spacer element (11) is rounded or convexly rounded.

3. Disc check valve as in claim 1, **characterised in that** the throttling projection (21) is provided either with a throttling exterior thread or with at least one throttling slit (22) penetrating the wall of the interior channel.

4. Disc check valve as in claim 1, **characterised in that** the other casing part (2) is fixed into a screw-in threaded projection (14) of a screw-in valve unit (V), preferably is fixed in threadable fashion, that the other casing part (2) has a smaller outer diameter than the screw-in threaded projection (14), and that at least one lateral channel (8) in the other casing part (2) is leading from the exterior to a blind bore (7) prolonging the valve seat (S2).

5. Disc check valve as in claim 1, **characterised in that** both casing parts (1, 2) are interconnected by a crimped connection or a threaded connection (3, 4).

6. Disc check valve as in claim 1, **characterised in that** the casing parts (1, 2) and the valve disc (P) respectively are made from steel, and that the sealing surface (10) as well as both valve seats (S1, S2) are hardened and ground.

## Revendications

1. Soupape anti-retour à disque (R) comprenant une cage de soupape (1, 2), dans laquelle sont prévus au moins un siège de soupape, associé à un premier raccord d'agent sous pression (A), et une chambre (K), limitrophe au siège de soupape et de diamètre plus grand que ce dernier, un disque de soupape (P) dans la chambre (K), qui est mobile par rapport au siège de soupape en direction de l'axe du siège et transversalement à ce dernier et présente une portée de joint (10), pouvant s'appliquer contre le siège de soupape, et des saillies de guidage (12) délimitant des sections de passage (13) du côté périphérique, la chambre (K) communiquant avec un second raccord d'agent sous pression (B), **caractérisée par** la combinaison des caractéristiques suivantes :
a) la chambre (K) est délimitée par deux parties de cage de soupape (1, 2) assemblées entre elles et présente deux parois de chambre (5, 6) en vis-à-vis, avec chacune un siège de soupape (S1, S2), les sièges de soupape (S1, S2) étant parallèles entre eux, de dimension égale et mutuellement alignés,
b) sur le disque de soupape (P), au moins un élément d'écartement (11) en saillie est disposé sur le côté arrière, opposé à la portée de joint (10), sur un diamètre extérieur au diamètre du siège de soupape,
c) le disque de soupape (P), avant l'assemblage des parties de cage de soupape (1, 2), peut être mis en place dans la chambre (K) en étant orienté sélectivement par la portée de joint (10) en direction de l'un ou de l'autre siège de soupape (S1 ou S2) de sorte que, indépendamment de la position de montage du disque de soupape (P), les parois de la chambre incluent entre elles avec un jeu d'ouverture le disque de soupape avec son élément d'écartement (11) et qu'une fonction anti-retour est obtenue dans la direction d'écoulement, dans laquelle la portée de joint (10) est orientée en direction du siège de soupape respectif (S1 ou S2),
d) l'une des parties (1) de la cage de la soupape anti-retour à disque (R), intégrée dans une soupape anti-retour d'étranglement (D), est réalisée sous forme de prolongement d'étranglement (21) avec un canal intérieur (9) menant au siège de soupape (S1).

2. Soupape anti-retour à disque suivant la revendication 1, **caractérisée en ce qu'**au moins une saillie de guidage (12) est munie de l'élément d'écartement (11), de préférence chaque saillie de guidage est munie d'un élément d'écartement, et que, au moins en une vue du disque de soupape (P) perpendiculaire à la portée de joint (10), le contour extérieur de chaque élément d'écartement (11) a un arrondi bombé ou convexe.

3. Soupape anti-retour à disque suivant la revendication 1, **caractérisée en ce que** le prolongement d'étranglement (21) présente, soit un filetage extérieur d'étranglement, soit au moins une fente d'étranglement (22) traversant la paroi du canal intérieur.

4. Soupape anti-retour à disque suivant la revendication 1, **caractérisée en ce que** l'autre partie de cage (2) est maintenue, de préférence avec une possibilité de vissage, dans un prolongement fileté (14) d'une unité de soupape vissée (V), et présente un diamètre extérieur plus petit que le prolongement fileté (14), et qu'au moins un canal transversal (8) mène de l'extérieur, dans l'autre partie de cage de soupape (2), à un trou borgne (7) prolongeant le siège de soupape (S2).

5. Soupape anti-retour à disque suivant la revendication 1, **caractérisée en ce que** les deux parties de cage de soupape (1, 2) sont assemblées entre elles par un assemblage par sertissage ou vissage (3, 4).

6. Soupape anti-retour à disque suivant la revendication 1, **caractérisée en ce que** les parties de cage de soupape (1, 2) et le disque de soupape (P) se composent respectivement d'acier, et que la portée de joint (10) ainsi que les deux sièges de soupape (S1, S2) sont trempés et rectifiés.
